# EUROPEAN PATENT SPECIFICATION

(11) **EP 1 273 475 B1**
(45) Date of publication and mention of the grant of the patent: **11.08.2004**
(21) Application number: 02013892.1
(22) Date of filing: 24.06.2002
(51) Int. Cl.: B60N 2/30

(54) **Child's car seat, integral with the rear seat of motor vehicles**
Ein im Rücksitz intergrierter Fahrzeugkindersitz
Siège d'enfant pour véhicule, intégré dans le siège arrière

(30) Priority: 06.07.2001 IT TO20010656
(43) Date of publication of application: 08.01.2003
(73) Proprietor: FIAT AUTO S.p.A., 10135 Torino (IT)
(72) Inventor: Luppino, Andrea, 10020 Montaldo Torinese (TO) (IT)
(74) Representative: Di Francesco, Gianni

(56) References cited:
- EP-A- 0 516 495
- DE-A- 3 215 488
- DE-A- 4 341 929
- FR-A- 2 693 156
- GB-A- 1 575 207
- US-A- 5 106 158
- US-A- 5 125 717
- US-A- 6 053 569

## Description

The present invention refers to a child's car seat, integral with the rear seat of a motor vehicle.

It is well know that according to safety regulations for traffic it is compulsory to use a special child's seat for children less than four or five year old, depending on the law of the different countries.

This means that the user has to face space problems, since these types of seats are quite large, and must be removed when an adult passenger is to be transported.

From DE-A-4341929 is known an adult seat where the cushion on the sitting is reversed to obtain a child's seat. Nevertheless said cushion is permanently linked, with rather complex and expensive mechanism to the adult seat.

It is an object of the present invention to provide a solution to those problems.

Said object is achieved by means of a child's car seat integral with the rear seat of a motor vehicle, presenting the characteristics set forth in claim 1.

Additional characteristics and advantages will become clear from the following invention referring to the appended drawings, provided as non restrictive example and in which:

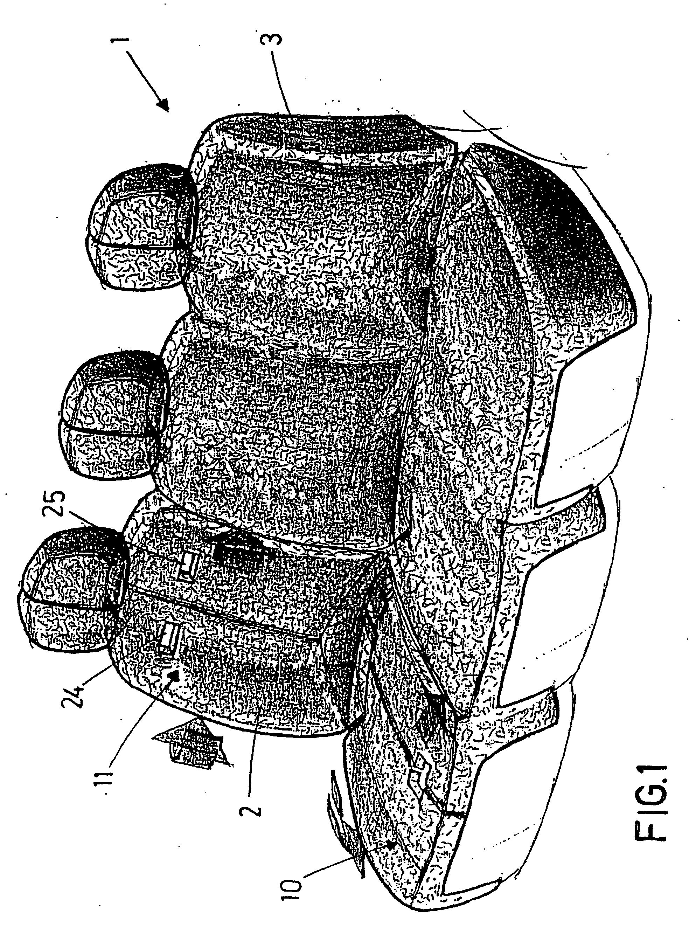

- figure 1 is an overall view of a rear seat of a motor vehicle with the child's seat integral with it;

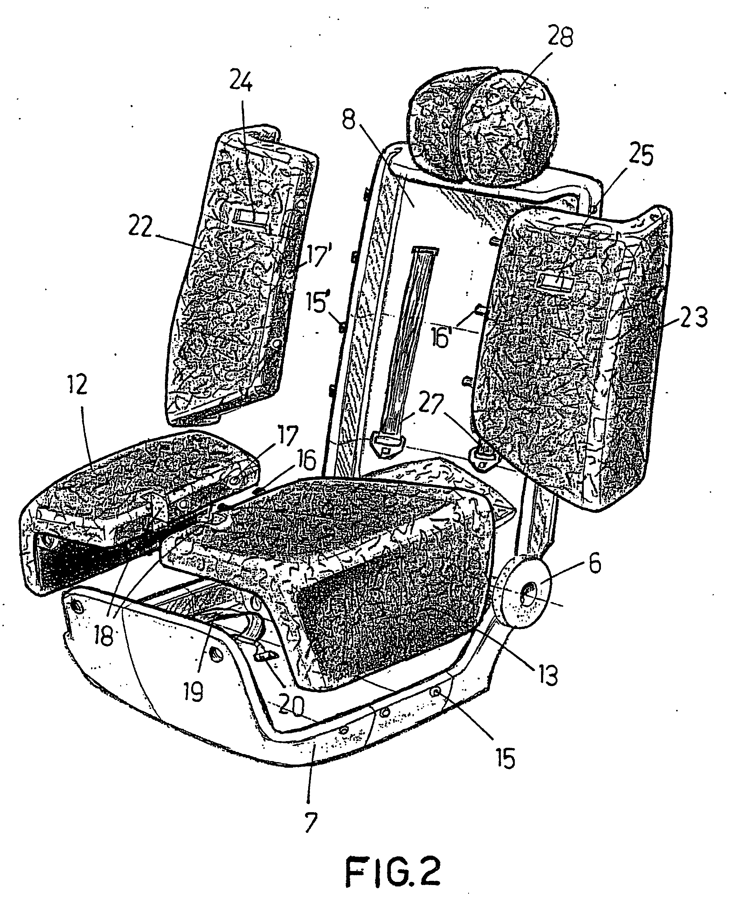

- figure 2 is an exploded view of the child's seat according to the invention, and
- figures 3 and 4 are illustrations of the child's car seat according to the invention, in its two positions of use, figure 3 showing the position for adult people and figure 4 showing the position for children.

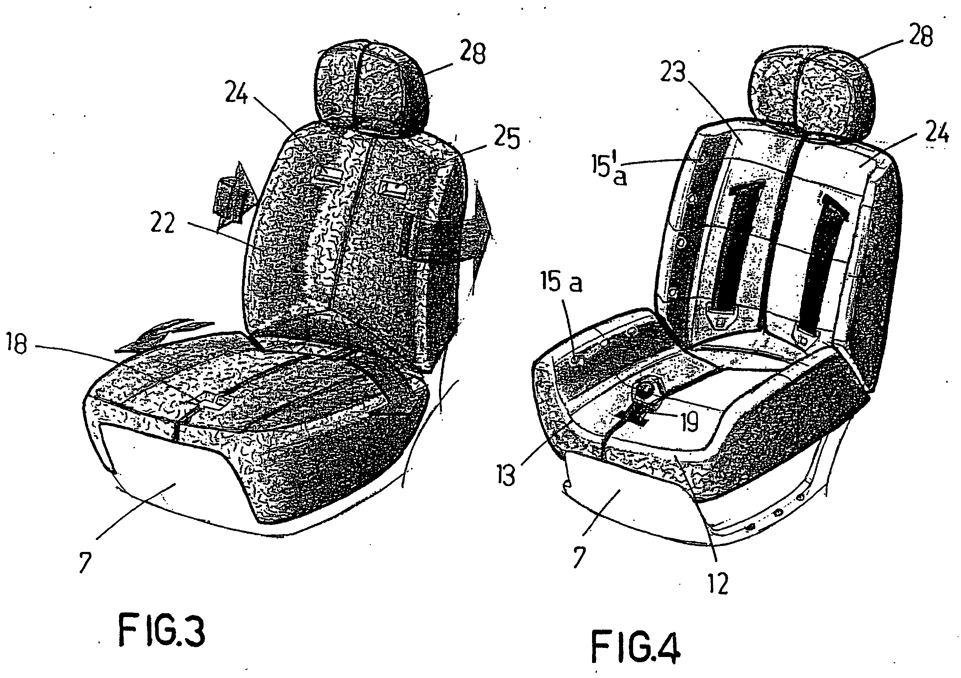

With reference to the figures, reference number 1 indicates a rear seat of a motor vehicle, consisting of the juxtaposition of at least two single seats, in the case shown a single seat 2 and a double seat 3 are juxtaposed. The single seat 2, according to the invention is built in such a way that it can be turned into the child's seat which is shown in detail in figure 4.

The child's car seat 2 consists of a bodywork 5, preferably made of plastic material, the inclination of its back being adjustable by means of a mechanism 6 of the known type and not described here in detail. Said bodywork consists of two basin 7 and 8, respectively the basin to support the sitting 10 and the basin to support the back 11, jointed between them by said mechanism. The sitting 10 of the seat consists of two mobile cushions 12 and 13 of L-shaped transversal section that can be fixed both to the basin 7, by means of snap engagements 15 as well as by means of seats 15a, and between them, along the joining edge by means of pivots 16 fixed on a cushion and which can be snap inserted into buttonholes 17 made on the other cushion. Each one of the two cushions 12 and 13 is also provided with a notch 18 that, when the two cushions are jointed, forms a buttonhole to allow the passage of the lap part 19 of a safety belt anchored to the basin 7 by means of a U bolt 20.

The cushions 22 and 23 of the back are made in the same way as those of the sitting and are as well fixed by means of snap engagements 15', seats 15'a and buttonholes 16' and 17'. However, their dimension and shape will be adequate to the basin 8 of the back 11 even if they remain basically similar to those of the sitting. Besides, the two cushions of the back 11 are provided at their upper part of two slots 24 and 25, adapted to allow the passage of the two safety belts 27 that retain the trunk of the child. Once the safety belts have passed through the slots, they can be engaged to the lap part 19. A headrest 28 is also fixed to the bodywork. The whole lot of the cushions is completed by a triangular cushion 30 integral with the bodywork at the point were the two basins 7 and 8 are jointed.

According to the invention, the shape of the mobile cushions is such that they can be *reversed* and fit inside the two basins 7 and 8 in order to form, together with the fixed cushion, the child's seat, the edges of the sitting and of the back being raised in order to form a side support (figure 4).

It is obvious that the cushions must be made of light, elastic and resistant material, such as polyurethane foam with a rigid core. In a further embodiment of the invention, not shown, both the sitting and back cushions will consist of a single piece so that they are more rigid and resistant, being still possible to apply this solution to the motor vehicle. The internal part or the cushions can be covered in a soft and non skid material, in order to further contribute to retain the occupant.

## Claims

1. Child's car seat integral with the rear seat of a motor vehicle, *said rear seat* consisting of at least two juxtaposed seats, including a bodywork made of a pair of basins (7, 8), one for the sitting and one for the back, jointed along one of their edges by means of a mechanism (6) intended to adjust the inclination of the back, said basins are adapted to retain at least a pair of cushions (12, 13, 23, 33) which in their normal position form the sitting and the back (10, 11) of a seat for adult people, **characterised in that** said at least a pair of cushions, when snap inserted inside said basins in their reversed position, form the sitting and the back of a child's seat.

2. Child's car seat as claimed in claim 1 **characterised in that** the cushions are at least four and are connected two by two by means of buttonholes and snap pivot (16, 17, 16', 17').

3. Child's car seat as claimed in claim 1 **characterised in that** the cushions are provided with notches or slots (18, 24, 25) to allow the passage of the safety belts anchored to the bodywork.

4. Child's car seat as claimed in claim 1 **characterised in that** the cushions (12, 13, 22, 23) present an L-shaped transversal section.

5. Child's car seat as claimed in claim 1 **characterised in that**, when in their normal position, the cushions are fixed to the bodywork by means of snap engagements (15, 15a, 15', 15'a).

## Patentansprüche

1. Kinderfahrzeugsitz, der in dem Rücksitz eines Kraftfahrzeugs integriert ist, wobei der Rücksitz aus zumindest zwei nebeneinanderliegenden Sitzen besteht, enthaltend einen Aufbau, der aus einem Paar Schalen (7, 8) besteht, eine für das Sitzteil und eine für das Rückenteil, die entlang einer ihrer Ränder durch einen zum Einstellen der Neigung des Rückenteils dienenden Mechanismus (6) miteinander verbunden sind, wobei die Schalen daran angepasst sind, wenigstens ein Kissenpaar (12, 13, 23, 33) zu halten, das in ihrer normalen Stellung das Sitz- und das Rückenteil (10, 11) eines Sitzes für Erwachsene bildet, **dadurch gekennzeichnet, dass** das wenigstens eine Kissenpaar, wenn es in den Schalen in ihrer umgedrehten Stellung eingerastet ist, das Sitz- und das Rückenteil eines Kindersitzes bildet.

2. Kinderfahrzeugsitz nach Anspruch 1, **dadurch gekennzeichnet, dass** die Kissen wenigstens vier Kissen umfassen, und dass immer zwei durch Schnappzapfen und Aufnahmeöffnungen (16, 17, 16', 17') miteinander verbunden sind.

3. Kinderfahrzeugsitz nach Anspruch 1, **dadurch gekennzeichnet, dass** die Kissen mit Aussparungen oder Schlitzen (18, 24, 25) versehen sind, um den Durchgang für die am Aufbau verankerten Sicherheitsgurte zuzulassen.

4. Kinderfahrzeugsitz nach Anspruch 1, **dadurch gekennzeichnet, dass** die Kissen (12, 13, 22, 23) einen L-förmigen Querschnitt aufweisen.

5. Kinderfahrzeugsitz nach Anspruch 1, **dadurch gekennzeichnet, dass** die Kissen, wenn sie sich in ihrer normalen Stellung befinden, mittels Schnappverbindungen (15, 15a, 15', 15'a) am Aufbau fixiert sind.

## Revendications

1. Siège enfant intégré dans le siège arrière d'un véhicule à moteur, le siège arrière étant constitué d'au moins deux sièges juxtaposés, incluant un châssis constitué d'une paire de bassins (7, 8), un pour le fond et l'autre pour le dossier, assemblés le long de l'un de leurs bords au moyen d'un mécanisme (6) destiné à régler l'inclinaison du dossier, les bassins sont adaptés pour maintenir au moins une paire de coussins (12, 13, 22, 23) qui, dans leur position normale, forment le fond et le dossier (10, 11) d'un siège pour adulte, **caractérisé en ce que** ladite au moins une paire de coussins, quand elle est insérée par encliquetage à l'intérieur des bassins dans sa position inversée, forme le fond et le dossier d'un siège enfant.

2. Siège enfant selon la revendication 1, **caractérisé en ce que** les coussins sont au moins au nombre de quatre et sont reliés deux par deux au moyen de boutonnières et d'un pivot d'encliquetage (16, 17, 16', 17').

3. Siège enfant selon la revendication 1, **caractérisé en ce que** les coussins sont pourvus d'encoches ou fentes (18, 24, 25) pour permettre le passage des ceintures de sécurité ancrées au châssis.

4. Siège enfant selon la revendication 1, **caractérisé en ce que** les coussins (12, 13, 22, 23) présentent une section transversale en forme de L.

5. Siège enfant selon la revendication 1, **caractérisé en ce que**, dans leur position normale, les coussins sont fixés sur le châssis au moyen d'encliquetages à pression (15, 15a, 15', 15'a).
